# EUROPÄISCHE PATENTSCHRIFT

(11) **EP 0 909 226 B1**
(45) Veröffentlichungstag und Bekanntmachung des Hinweises auf die Patenterteilung: **13.11.2002**
(21) Anmeldenummer: 97925817.5
(22) Anmeldetag: 26.06.1997
(51) Int. Cl.: B07C 5/342, D01G 31/00, G01N 21/85

(54) **VERFAHREN UND VORRICHTUNG ZUR ERKENNUNG VON FREMDTEILEN IN EINEM FASERSTROM AUS VORWIEGEND TEXTILEN FASERN**
PROCESS AND DEVICE FOR RECOGNITION OF FOREIGN BODIES IN A FIBRE FLOW OF PREDOMINANTLY TEXTILE FIBRES
PROCEDE ET DISPOSITIF POUR IDENTIFIER DES CORPS ETRANGERS DANS UN COURANT FIBREUX COMPRENANT ESSENTIELLEMENT DES FIBRES TEXTILES

(30) Priorität: 02.07.1996 CH 165296
(43) Veröffentlichungstag der Anmeldung: 21.04.1999
(73) Patentinhaber: ZELLWEGER LUWA AG, 8610 Uster (CH)
(72) Erfinder: AEMMER, Peter, F., CH-8907 Wettswil (CH)
(74) Vertreter: Ellenberger, Maurice
(86) Internationale Anmeldenummer: CH9700253
(87) Internationale Veröffentlichungsnummer: WO98000243

(56) Entgegenhaltungen:
- EP-A- 0 223 446
- EP-A- 0 226 430
- DE-A- 4 415 907

## Beschreibung

Die Erfindung betrifft ein Verfahren und eine Vorrichtung zur Erkennung von Fremdteilen in einem aufgelockerten Faserstrom aus vorwiegend textilen Fasern, bei dem der Faserstrom und mindestens eine Bezugsgrösse künstlich visuell erfasst werden.

Aus den DE-A-4340165 und DE-A-4340173 sind solche Verfahren bekannt mit denen beispielsweise mehr oder weniger stark mit Fremdteilen verschmutzte Baumwolle oder Wolle, die in Flocken anfällt, von diesen Fremdteilen befreit werden kann. Dabei kann man zwischen echten Fremdstoffen, die anderes Material betreffen und unechten Fremdstoffen, die zwar gleiches Material aber in anderem Zustand oder anderer Farbe betreffen, unterscheiden. Unechte Fremdstoffe sind beispielsweise Baumwoll- oder Wollfasern, die teilweise verrottet, verklebt oder verunreinigt sind. Echte Fremdstoffe sind Steine, Erden, Glas, Stengelreste, Blätter, Verpackungsmaterial, Haare, Federn usw. Während grobe Fremdstoffe in den bekannten Geräten des Spinnereivorwerks entfernt werden, sollen Fremdstoffe, die schwieriger zu trennen sind, gemäss den genannten Verfahren erkannt und aus dem Flockenstrom ausgeschleust werden. Dabei werden die Fasern oder Flocken kontinuierlich an Farbsensoren vorbei transportiert, die Fremdstoffe erkennen sollen. Material welches Bestandteile enthält, auf welches die Farbsensoren angesprochen haben, wird anschliessend ausgeschleust.

Ein Nachteil solcher bekannter Verfahren ist darin zu sehen, dass damit viele Fremdstoffe nicht erkannt werden. Dies beispielsweise deshalb, weil die Fremdstoffe, um erkannt zu werden, relativ grosse farbliche Abweichungen zu den textilen Fasern oder zum Hintergrund aufweisen müssen, was nicht immer zutrifft. Solche bekannte Verfahren arbeiten wenig selektiv.

Die Erfindung, wie sie in den Patentansprüchen gekennzeichnet ist, löst nun die Aufgabe, ein Verfahren und eine Vorrichtung zu schaffen, die schwierig zu trennende Fremdteile mit gesteigerter Wirksamkeit aus dem Faserstrom erkennen lassen.

Der Oberbegriff des Anspruchs 1 ist aus DE-A-4 415 907 und EP-A-226 430, der des Anspruchs 5 aus DE-A-4 415 907 bekannt.

Die Aufgabe wird durch die kennzeichnenden Merkmale der Ansprüche 1 und 5 gelöst.

Die durch die Erfindung erreichten Vorteile sind insbesondere darin zu sehen, dass der oder die Vergleichsprozesse, die einem Entscheid über Abwesenheit oder Vorhandensein von Fremdstoff vorangehen, sich automatisch laufend an die wirklichen Gegebenheiten der im Faserstrom mitgeführten Fasern anpassen. Die Anpassungsfähigkeit ist solange als stabil und robust anzusehen, als die Voraussetzung erfüllt ist, dass Fremdstoff im Vergleich zu gutem Fasermaterial statistisch gesehen selten vorkommt. Dieselben Vorteile werden erreicht, wenn als Bezugsgrösse ein bereits gereinigter, von Fremdteilen befreiter Faserstrom verwendet wird.

Im folgenden wird die Erfindung anhand eines Beispiels und mit Bezug auf die beiliegenden Zeichnungen näher erläutert. Es zeigen:
Figur 1 eine schematische Darstellung einer erfindungsgemässen Vorrichtung,
Figur 2 eine vereinfachte Darstellung wesentlicher konstruktiver Merkmale der Vorrichtung und
Figuren 3 bis 6 je eine vereinfachte Darstellung von weiteren Ausführungsformen der erfindungsgemässen Vorrichtung.

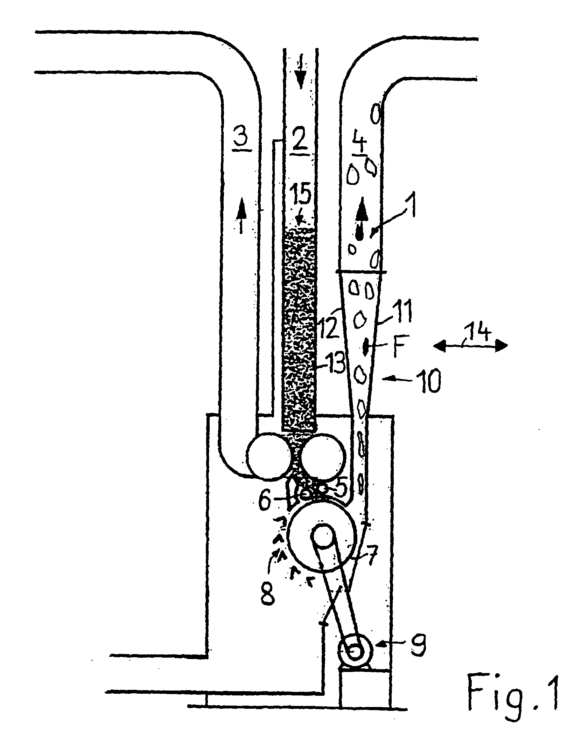

Fig. 1 zeigt beispielsweise einen Teil einer Reinigungsmaschine für Flocken, die einen stark aufgelockerten Faserstrom 1 erzeugt. Diese besteht beispielsweise aus einem Staukanal 2, einem Abluftkanal 3 und einem Kanal 4 für gereinigte Flocken oder Fasern. Ferner erkennt man zwei kleine Speisewalzen 5 und 6, eine Reinigungswalze 7, einen Messerrost 8 und einen Antrieb 9 für die Speisewalzen 5, 6 und die Reinigungswalze 7. Soweit handelt es sich um eine bekannte Reinigungsmaschine. In einem Bereiche 10 sind aber der Staukanal 2 und der Kanal 4 mit je einem Fenster 11, 12, 13 versehen, so dass diese Kanäle für Licht in der Richtung eines Doppel-Pfeiles 14 durchlässig, also beispielsweise durchsichtig ausgebildet sind. Diese Anordnung dient dazu, den Faserstrom 1 im Kanal 4 aus der Richtung des Pfeiles 14 beispielsweise mit einem Sensor erfassen zu können. Dabei bilden die gestauten Fasern 15 im Staukanal 2 einen Hintergrund oder eben eine Bezugsgrösse für die Flocken oder Fasern im Faserstrom 1, die mindestens in zeitlichen Abständen oder hier durch das langsame kontinuierliche Vorrücken der Fasern 15, laufend angepasst wird.

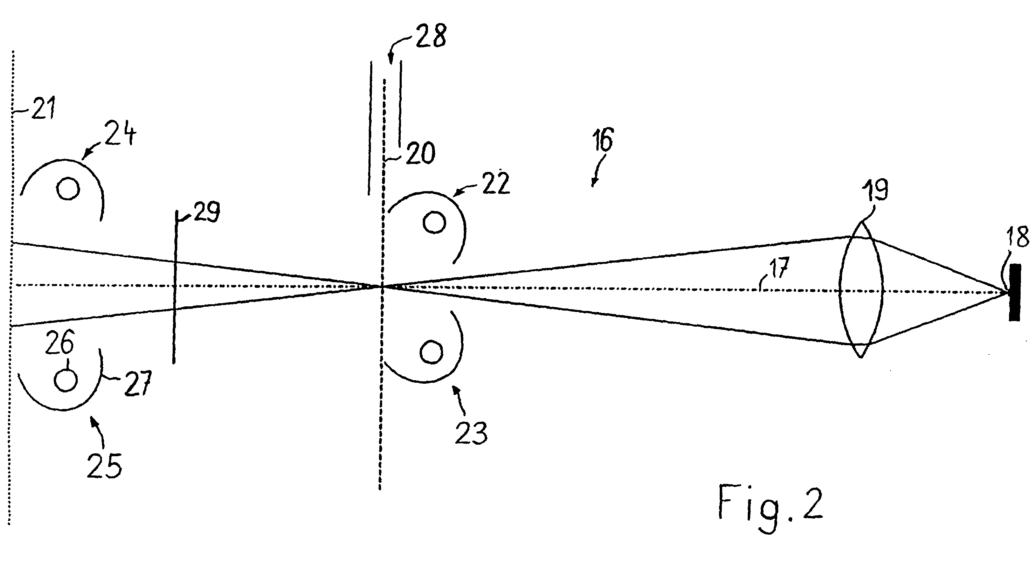

Fig. 2 zeigt vereinfacht einen Strahlengang 16 wie er bei der Erkennung der Fremdteile in der Vorrichtung gemäss Fig. 1 und auch in den nachfolgend noch beschriebenen Vorrichtungen auftritt. Längs einer optischen Achse 17 sind ein Zeilen- oder Punktsensor 18, ein Objektiv 19, ein Vordergrund oder eine Objektfläche 20 und ein Hintergrund 21 oder eine Bezugsfläche angeordnet. Beidseits der optischen Achse 17 sind vor dem Vordergrund 20 und vor dem Hintergrund 21 als Lichtquellen beispielsweise Gasentladungsröhren oder röhrenförmige Glühlampen mit annähernd elliptischen Spiegeln 22, 23, 24 und 25 angeordnet. Dabei liegt eine röhrenförmige Lichtquelle 26 jeweils in einem Brennpunkt der Ellipse des zugeordneten Spiegels 27, während der andere Brennpunkt so liegt, dass der Hintergrund 21 gleichmässig beleuchtet ist. Die Lichtquellen 22, 23 und 24, 25 sind alle gleich aufgebaut und sollen den Vordergrund 20 und den Hintergrund 21 gleich hell beleuchten. Gemäss Fig. 1 liegt die Objektfläche 20 etwa in der Mittelebene des Kanals 4, während der Hintergrund 21 etwa im Fenster 13 in der Seitenwand des Staukanales 2 liegt. Vorzugsweise ist die Tiefenschärfe so gross, dass statt von der Objektfläche von einer Objektzone 28 die Rede sein kann, die etwa der Tiefe eines Kanals für den Flockenstrom entspricht. Durch den gezeigten Strahlengang 16 wird die Objektzone 28 scharf und der Hintergrund unscharf oder verschwommen auf den Punkt- oder Zeilensensor 18 abgebildet. Wahlweise kann auch eine Streuscheibe 29 im Strahlengang 15 zwischen der Objektzone 28 und dem Hintergrund 21 angeordnet sein. Es ist so zu verstehen, dass in der praktischen Realisierung mehrere Punktsensoren vorgesehen werden, die eine Zeile bilden oder mehrere Punktoder Zeilensensoren, die ein Feld bilden.

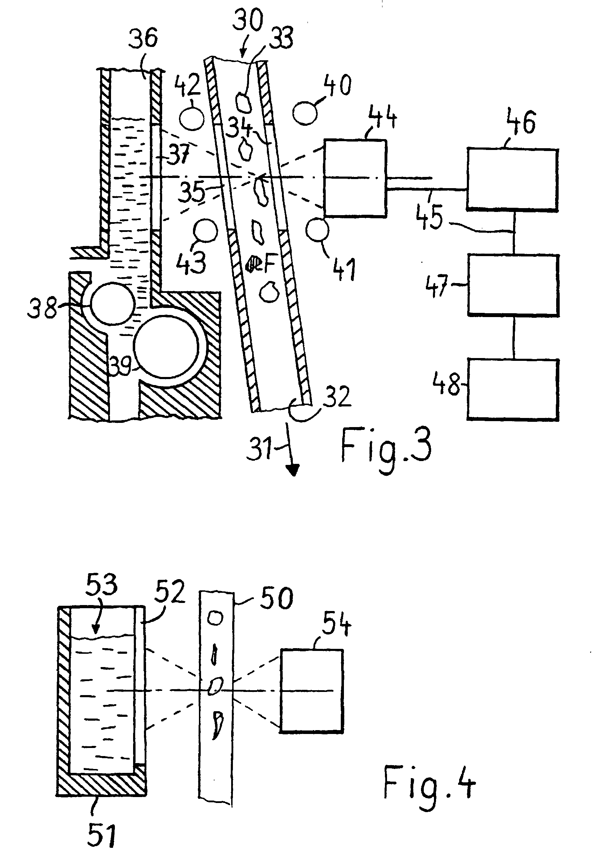

Fig. 3 zeigt eine weitere Vorrichtung zur Erkennung von Fremdteilen in einem Faserstrom. Ein aufgelockerter Faserstrom 30, der hier aus mehr oder weniger locker in Richtung eines Pfeiles 31 vorzugsweise pneumatisch z.B. in einem laminaren Luftstrom geförderter, zu Flocken 33 vereinigter Fasern besteht, wird in einem Kanal 32 zugeführt. Darin befinden sich möglicherweise auch Fremdteile F. Der Kanal 32 weist zwei einander gegenüberliegende Fenster 34, 35 auf. Neben oder hinter dem Kanal 32 ist ein weiterer Kanal 36 mit einem Fenster 37 angeordnet. Die Fenster 34, 35 und 37 stehen so zueinander, dass durch den Kanal 32 hindurch Einblick in den Kanal 36 gewährt ist. Im Kanal 36 sind Flocken oder Fasem vor dem Fenster 37 gestaut. Speisewalzen 38, 39 dienen eben auch dazu, den Fluss der gestauten Fasern im Kanal 36 so zu steuem, dass das Fenster 37 immer durch Fasern hinterlegt ist. Vor den Kanälen 32 und 36 sind je zwei Lichtquellen 40, 41 und 42, 43 angeordnet, die beispielsweise als handelsübliche röhrenförmige Lichtquellen ausgebildet sein können, und die zur gleichmässigen und gleich starken schattenfreien Beleuchtung der Faserströme hinter den durchsichtigen Fenstern 34 und 37 in den Kanälen 32 und 36 dienen. Ein Sensor 44, der beispielsweise als Kamera ausgebildet sein kann, hat durch den Kanal 32 hindurch Einblick in den Kanal 36. Damit bildet das Fenster 34 einen ersten Ort zur Gewinnung von Messwerten und das Fenster 37 einen zweiten Ort zur Gewinnung von Durchschnittswerten oder Bezugsgrössen aus einem Faserstrom. Über eine Leitung 45 oder einen Bus ist der Sensor 44 mit einer Auswerteeinheit 46 und diese wiederum mit einer Datenausgabeeinheit 47, wie z. B. einem Bildschirmgerät oder Drucker und einer Dateneingabeeinheit 48, wie z.B. einer Tastatur, verbunden. Die Auswerteeinheit 46 kann beispielsweise ein Bildverarbeitungssystem beinhalten, das aufgrund statistischer Merkmale die Unterscheidung zwischen Fremdstoff und Flocken weiter verbessert. Dabei kann ein Zeilensensor zur Erfassung von Strahlung vorgesehen sein, die durch den Faserstrom im Kanal 32 reflektiert oder gestreut ist. Der Sensor 44, die Auswerteeinheit 46, die Datenausgabeeinheit 47 und die Dateneingabeeinheit 48 sind an sich bekannte Elemente und deshalb hier nicht näher dargestellt.

Eine weitere Ausführung der Vorrichtung ist in Fig. 4 dargestellt, bei der aber nur ein Kanal 50 vorhanden ist. An Stelle des Kanales 36 (Fig. 3) ist hier ein Behälter 51 vorgesehen, der mit textilen Fasern gefüllt ist, die Fasern im Kanal 50 entsprechen. Dieser Behälter 51 ist gegen den Kanal 50 hin mit einem Fenster 52 offen oder durchsichtig ausgebildet und dient als Hintergrund für die Betrachtung des Flockenstromes im Kanal 50. Der Behälter 51 oder sein Inhalt 53 kann periodisch ausgewechselt werden, um den Hintergrund an Veränderungen im Flockenstrom im Kanal 50 anzupassen, die nicht als Fremdstoffe zu erkennen sind. Auch hier ist ein Sensor 54 zur Erfassung des Flockenstromes im Kanal 50 mit dem Inhalt 53 als Bezugsgrösse zu erkennen. Als Inhalt 53 sind Fasern oder Flocken denkbar, die Fremdstoffe enthalten, oder von denen die Fremdstoffe bereits ausgeschieden sind.

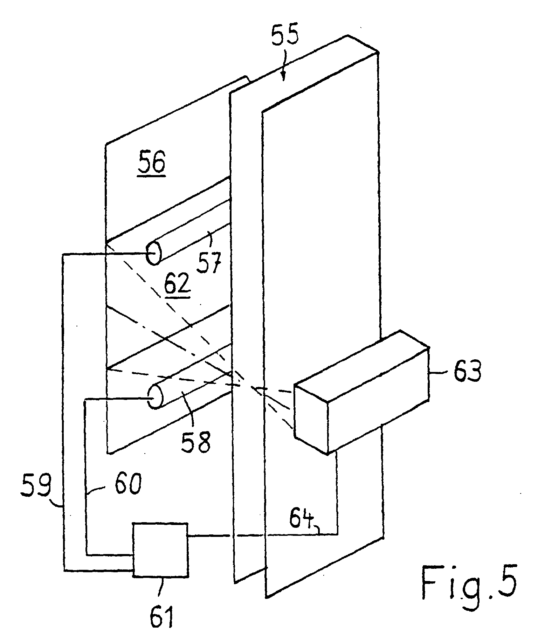

Eine weitere Ausführung der Vorrichtung ist in Fig. 5 dargestellt, bei der wie bei Fig. 4 nur ein Kanal 55 für einen aufgelockerten Flockenstrom vorhanden ist. An Stelle des Kanales 36 (Fig. 3) ist hier eine Fläche 56 vorgesehen, die von Lichtquellen 57, 58 beleuchtet wird. Über Leitungen 59, 60 und einen Regler 61 sind diese Lichtquellen 57, 58 zur Steuerung von Intensität und Farbe der Beleuchtung der Fläche 56 miteinander verbunden, so dass Flocken im Kanal 55 vor diesem Hintergrund verschwinden. Dies gilt insbesondere für den Bereich eines Bildes 62, das im Blickfeld eines Sensors 63 liegt. Hier geht es darum ein Bild einer Ansammlung textiler Fasern zu erzeugen oder zu simulieren, wie es beispielsweise im Staukanal 2 zu sehen wäre. Dazu könnte die Fläche 56, 62 auch weitere Ausbildungen erfahren, wie beispielsweise auch eine Projektion eines Bildes aufnehmen oder durch einen Bildschirm gebildet sein. Eine Leitung 64 verbindet zudem die Regelung 61 mit dem Sensor 63.

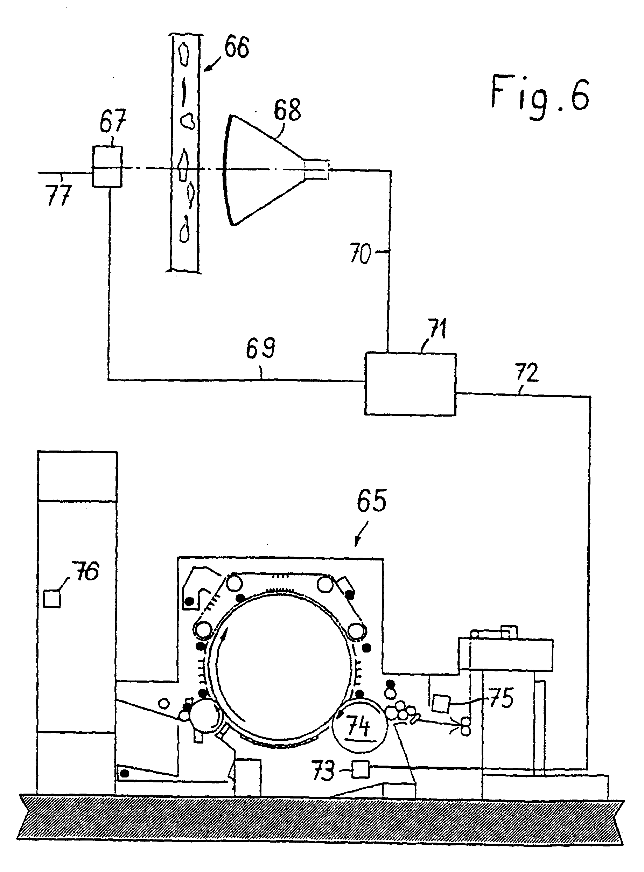

In Fig. 6 ist eine weitere Ausführung und Anwendung der Erfindung im Zusammenhang mit einer Karde 65 dargestellt. Neben der Karde 65 ist wiederum ein Kanal 66 für einen aufgelockerten Flockenstrom vorhanden. Dieser Kanal 66 liegt vorzugsweise, von der Karde aus gesehen, stromaufwärts. Auf einer Seite des Kanals 66 ist ein Sensor 67 und auf der anderen Seite eine Bildröhre 68 angeordnet. Über Leitungen 69, 70 sind der Sensor 67 und die Bildröhre 68 mit einer Regelung 71 verbunden, die wiederum über eine Leitung 72 mit einem weiteren Sensor 73 verbunden ist. Dieser ist hier im Bereiche einer Ablösewalze 74 in der Karde angeordnet. Es gibt aber noch weitere Orte an denen ein solcher Sensor angeordnet sein könnte. Diese sind mit Sensoren 75 und 76 belegt. Sensor 75 ist beispielsweise im Bereiche des austretenden Vlieses, Sensor 76 im Stauraum vorgesehen.

Die Wirkungsweise der Vorrichtung ist wie folgt:
Ein Faser- oder Flockenstrom, der Fremstoffe enthält wird möglichst weitgehend aufgelöst, so dass die Flocken möglichst vereinzelt in einem Luftstrom gefördert werden, wie dies in den Kanälen 4, 32, 50, 55, 66 erfolgt. Wie diese Vereinzelung zu geschehen hat, ist an sich bekannt und deshalb hier ausser in Fig. 1 durch die Reinigungswalze 7 nicht näher dargestellt. Der so behandelte Faser- oder Flockenstrom wird parallel, vor oder neben einem Hintergrund geführt und visuell beispielsweise durch einen Sensor betrachtet, wobei der Hintergrund an Veränderungen des Flocken- oder Faserstromes periodisch oder laufend angepasst wird. Dies insbesondere um allmählich eintretende Farb- oder Helligkeitsänderungen des Faser- oder Flockenstromes zu berücksichtigen indem die Farbe oder die Helligkeit des Hintergrundes an den Faser- oder Flokkenstrom angepasst wird. Um dies zu gewährleisten, wird der Faser- oder Flockenstrom vor einem anpassbaren Hintergrund betrachtet, der vorzugsweise aus dem selben Faser- oder Flokkenmaterial besteht. So gibt es im Faser- oder Flockenstrom einen ersten Ort für dessen Messung oder Erfassung und einen zweiten Ort an dem er als Bezugsgrösse oder als Hintergrund wirkt. Bei der Vorrichtung gemäss Fig. 1 ist der erste Ort im Bereiche 10 und der zweite Ort im Staukanal 2 beim Fenster 13 zu finden. Hier sind die beiden Orte längs des Faser- oder Flockenstromes in Serie angeordnet. Bei der Vorrichtung gemäss der Fig. 3 sind diese Orte (Fenster 34 und 37) nebeneinander oder parallel angeordnet und der Faser- oder Flockenstrom wird in zwei parallelen Strömen geführt. Vorzugsweise ist darauf zu achten, dass die Intensität der Beleuchtung an beiden Orten gleich stark ist. Für die Betrachtung des Flockenstromes ist diese Beleuchtung auf einen Bereich um die Achse 17 in der Objektzone 28 (Fig. 2) zu konzentrieren. Für die Bezugsgrösse oder den Hintergrund 21 ist der Bereich zwischen Lichtquellen 24 und 25 gleichmässig zu beleuchten.

In der Vorrichtung gemäss Fig. 3 wird ein Faserstrom 30 der aus mehr oder weniger grossen Flocken 33 besteht, die beispielsweise im wesentlichen aus Baumwollfasem sowie aus darin möglicherweise eingelagerten Fremdteilen F bestehen, im Kanal 32 zugeführt. Im Kanal 36 werden die Flocken oder Fasern gestaut und nur noch langsam nach unten bewegt. Im Kanal 32 werden sie in möglichst lockerer Formation schneller bewegt. Der Zweck dieser Anordnung besteht darin, dass die gestauten Fasem vor dem Fenster 37 im Kannal 36, für die visuelle Erfassung, der im Kanal 32 vereinzelt durchziehenden Flocken, durch den Sensor 44 einen Hintergrund bilden, der sich mit der Zeit anpasst.

Die gleiche Wirkung kann mit einer Anordnung von Kanälen 2, 4 gemäss Fig. 1 erreicht werden. Im Gegensatz zur Ausführung gemäss Fig. 3, wo der Kanal 36 der als Hintergrund dient und der Kanal 32, in dem der Faserstrom erfasst wird, parallel geschaltet sind, ist hier der Staukanal 2, als Hintergrund, mit dem Kanal 4 zur Erfassung des Faserstromes in Serie geschaltet. Zusätzlich werden bei dieser Ausführung die komprimierten Flocken oder Fasern 15 aus dem Staukanal 2 durch die Speisewalzen 5, 6, einer Reinigungswalze 7 zugeführt, die zusammen mit dem Messerrost 8 die Flocken in bekannter Weise auflöst. Die aufgelösten Flocken werden in den Kanal 4 abgesaugt, wo sie stark vereinzelt an den Fenstern 11, 12 vorbeiziehen und so aus der Richtung 14 betrachtet werden können.

Die Bezugsgrösse d.h. der Hintergund für den betrachteten Flockenstrom ist damit adaptiv veränderbar, denn er entspricht immer der Farbe oder dem Bild von im Durchschnitt vorhandenen Fasern. Dies kann auch nachgebildet werden, wie dies mit den Vorrichtungen gemäss Fig. 4 und 5 geschehen kann. Dabei ist gemäss Fig, 4 die Anpassung simuliert indem diese nicht kontinuierlich sondern in diskreten Schritten durch das Auswechseln des Inhaltes 53 oder des Behälters 51 erfolgen kann. Gemäss Fig. 5 ist auch das Material simuliert indem nicht mehr wirkliche textile Flocken oder Fasern mit Fremdstoffen, sondern ein Bild davon erzeugt wird, das vorzugsweise nur Mittelwerte von Farbe oder Helligkeit der Fasern und Flocken imitiert. Vorzugsweise zeigt das Bild dasselbe Material, beispielsweise indem es von denselben Baumwollballen oder derselben Lieferung von einem einfachen Sensor oder von einer Kamera aufgenommen und auf die Fläche 56 projiziert ist. Im einfachsten Falle wird die Fläche 56 durch die Lichtquellen 57, 58 so hell beleuchtet, dass die einzelnen Flocken im Kanal 55, die keine Fremdstoffe enthalten, aus der Fläche 56 optisch nicht hervortreten. Die Lichtquellen 57, 58 können bezüglich Leuchtstärke und Farbe über die Regelung 61 angesteuert werden und zwar beispielsweise so, dass Flocken die vor dem Bild 62 im Kanal 55 vorbeiziehen nicht aus dem Bild 62 hervortreten und dass im Bild 62 eine durchschnittliche Farbe oder Helligkeit erzeugt wird. Ein Signal aus dem Sensor 63, das über Leitung 64 in den Regler 61 gelangt, stellt die Beleuchtung so ein, dass nur grössere Farbabweichungen aus dem Bild 62 hervortreten, dass aber die Beleuchtung an kleinere allmähliche Abweichungen im Faserstrom angepasst wird.

Bei der Ausführung gemäss Fig. 6 wird in der Bildröhre 68 ein zeitlich und örtlich gemitteltes Farb- oder Helligkeitsbild eines Faserstromes erzeugt, wie es an verschiedenen Stellen beispielsweise in einer Karde 65 durch einen einfachen Sensor oder eine Kamera erzeugt werden kann. Das Signal aus dieser Aufnahme gelangt über Leitung 72 zum Regler 71 und von diesem über Leitung 70 zur Bildröhre 68. Der Sensor 67 erkennt so Fremdstoffe, die gegenüber dem Bild in der Bildröhre 68 hervortreten. Über die Leitung 69 wird vom Sensor 67 ein Signal abgegeben, das für einen laufenden Farb- oder Helligkeitsabgleich im Regler 71 verwendet wird und damit die Farbe und Leuchtstärke nachregelt. Der Grundfarbabgleich wird einmalig am Sensor 73 eingestellt. Über eine Leitung 77 gibt der Sensor 67 ein Signal zum Ausschleusen von Fremdstoffen ab.

Abschliessend ist festzuhalten, dass das in einem Sensor durch die vorbeiziehenden Faserflocken erzeugte Signal in an sich bekannter und deshalb hier nicht näher dargestellter Art ausgewertet und für die Steuerung einer Ausschleusung von Fremdstoffen aus dem Flockenstrom in den Kanälen 4, 32 verwendet werden kann, wie dies aus den in der Einleitung genannten Schriften bereits dargelegt ist. Das erfindungsgemässe Verfahren bzw. die Vorrichtung verbessern aber die Arbeitsweise bekannter Sensoren erheblich.

## Patentansprüche

1. Verfahren zur Erkennung von Fremdteilen (F) in einem aufgelockerten Faserstrom (1) aus vorwiegend textilen Fasern, bei dem der Faserstrom und mindestens eine Bezugsgrösse künstlich visuell an einem ersten Ort (10) erfasst werden, **dadurch gekennzeichnet, dass** diese Bezugsgrösse (15, 21, 53) mindestens von Zeit zu Zeit dadurch angepasst wird, dass diese Bezugsgrösse an einem zweiten Ort (13) aus dem Faserstrom (1) selbst entnommen wird.

2. Verfahren nach Anspruch 1, **dadurch gekennzeichnet, dass** die Bezugsgrösse in einer Bezugsfläche (21) und der Faserstrom in einem Abstand dazu in einer Objektzone (28) im selben Strahlengang (16) angeordnet werden.

3. Verfahren nach Anspruch 2, **dadurch gekennzeichnet, dass** die Objektzone (28) scharf, die Bezugsfläche (21) verschwommen erfasst wird.

4. Verfahren nach Anspruch 2, **dadurch gekennzeichnet, dass** in der Objektzone und in der Bezugsfläche ein Faserstrom (15, 1) fliesst.

5. Vorrichtung zur Durchführung des Verfahrens nach Anspruch 1, mit einem Kanal (4) für einen aufgelockerten Faserstrom (1), der für Licht durchgängig ausgebildet ist und mit einem Hintergrund, der als Bezugsgrösse angeordnet ist, **dadurch gekennzeichnet, dass** der Hintergrund durch einen Kanal (2, 36) mit darin gestauten Fasern (15) gebildet wird.

6. Vorrichtung nach Anspruch 5, **dadurch gekennzeichnet, dass** der Kanal für den aufgelockerten Faserstrom einen ersten Ort (10) und der Kanal mit den gestauten Fasern einen zweiten Ort (13) aufweist, die beide längs des Faserstromes angeordnet sind.

7. Vorrichtung nach Anspruch 6, **dadurch gekennzeichnet, dass** der erste und der zweite Ort in Serie angeordnet sind.

8. Vorrichtung nach Anspruch 6, **dadurch gekennzeichnet, dass** der erste und der zweite Ort parallel angeordnet sind.

9. Vorrichtung nach Anspruch 6, **dadurch gekennzeichnet, dass** der Kanal für den aufgelockerten Faserstrom auf zwei Seiten und der Kanal für den gestauten Faserstrom auf einer Seite ein Fenster (34, 35, 37) aufweist, wobei alle Fenster so zueinander stehen, dass durch den Kanal (32) für den aufgelockerten Faserstrom hindurch Einblick in den Kanal (36) für den gestauten Faserstrom gewährt ist.

10. Vorrichtung nach Anspruch 6, **dadurch gekennzeichnet, dass** der Hintergrund durch ein Bild (62) eines Faserstromes auf einer Fläche (56) gebildet ist.

## Claims

1. Method of detecting impurities (F) in a loosened fibre stream (1) of mainly textile fibres, wherein the fibre stream and at least one reference quantity are artificially visually sensed at a first location (10), **characterized in that** said reference quantity (15, 21, 53) is adapted at least from time to time **in that** said reference quantity is derived at a second location (13) from the fibre stream (1) itself.

2. Method according to claim 1, **characterized in that** the reference quantity is disposed in a reference surface (21) and the fibre stream is disposed at a distance from said reference surface in an object zone (28) in the same path of rays (16).

3. Method according to claim 2, **characterized in that** the object zone (28) is sensed in a clearly defined manner and the reference surface (21) is sensed in an indistinct manner.

4. Method according to claim 2, **characterized in that** a fibre stream (15, 1) flows in the object zone and in the reference surface.

5. Device for effecting the method according to claim 1, having a channel (4) for a loosened fibre stream (1), which is designed to be permeable to light, and having a background disposed as a reference quantity, **characterized in that** the background is formed by a channel (2, 36) having fibres (15) retained therein.

6. Device according to claim 5, **characterized in that** the channel for the loosened fibre stream comprises a first location (10) and the channel having the retained fibres comprises a second location (13), both of which are disposed along the fibre stream.

7. Device according to claim 6, **characterized in that** the first and the second location are arranged in series.

8. Device according to claim 6, **characterized in that** the first and the second location are arranged in parallel.

9. Device according to claim 6, **characterized in that** at two sides of the channel for the loosened fibre stream and at one side of the channel for the retained fibre stream there is a window (34, 35, 37), all of the windows being positioned relative to one another so as to afford a view through the channel (32) for the loosened fibre stream into the channel (36) for the retained fibre stream.

10. Device according to claim 6, **characterized in that** the background is formed by an image (62) of a fibre stream on a surface (56).

## Revendications

1. Procédé pour identifier des corps étrangers (F) dans un courant fibreux (1) désagrégé comprenant essentiellement des fibres textiles, dans lequel le courant fibreux et au moins une grandeur de référence sont détectés artificiellement de manière visuelle à un premier endroit (10), **caractérisé en ce que** cette grandeur de référence (15, 21, 53) est adaptée au moine de temps en temps par le fait que cette grandeur de référence est extraite elle-même du courant fibreux (1) à un deuxième endroit (13).

2. Procédé selon la revendication 1, **caractérisé en ce que** la grandeur de référence est disposée dans une surface de référence (21) et le courant à une distance de celle-ci, dans une zone objet (28) dans le même trajet optique (16).

3. Procédé selon la revendication 2, **caractérisé en ce que** la zone objet (28) est détectée comme étant nette, la surface de référence (21) comme étant diffuse.

4. Procédé selon la revendication 2, **caractérisé en ce qu'**un courant fibreux (15, 1) circule dans la zone objet et dans la surface de référence.

5. Dispositif pour réaliser le procédé selon la revendication 1, avec un canal (4) pour un courant fibreux (1) désagrégé qui est transparent et muni d'un arrière-plan disposé comme grandeur de référence, **caractérisé en ce que** l'arrière-plan est formé par un canal (2, 36) retenant des fibres (15).

6. Dispositif selon la revendication 5, **caractérisé en ce que** le canal pour le courant fibreux désagrégé comporte un premier endroit (10) et le canal avec les fibres retenues un deuxième endroit (13) qui sont disposés tous les deux le long du courant fibreux.

7. Dispositif selon la revendication 6, **caractérisé en ce que** le premier et le deuxième endroits sont disposés en série.

8. Dispositif selon la revendication 6, **caractérisé en ce que** le premier et le deuxième endroits sont disposés en parallèle.

9. Dispositif selon la revendication 6, **caractérisé en ce que** le canal pour le courant fibreux désagrégé et le canal pour le courant fibreux retenu présentent une fenêtre (34, 35, 37), respectivement sur deux côtés et un côté, toutes les fenêtres étant placées les unes par rapport aux autres de telle sorte que l'on puisse regarder dans le canal (36) pour le courant fibreux retenu au travers du canal (32) pour le courant fibreux désagrégé.

10. Dispositif selon la revendication 6, **caractérisé en ce que** l'arrière-plan est formé par une image (62) d'un courant fibreux sur une surface (56).
